# EUROPEAN PATENT APPLICATION

(11) **EP 4 790 254 A1**
(43) Date of publication of application: **12.08.2026**
(21) Application number: 26154810.1
(22) Date of filing: 28.01.2026
(51) Int. Cl.: F02D 41/00, F02D 17/02, B60W 20/00, F02D 41/22, B60K 6/20, B60L 50/53, B60L 9/00, F02N 11/08

(54) **ENGINE CONTROL SYSTEM FOR VEHICLE PROVIDED WITH CYLINDER DEACTIVATION**

(30) Priority: 07.02.2025 US 202563755764 P; 23.01.2026 US 202619458472
(71) Applicant: Cummins Power Generation, Inc., Minneapolis MN 55432 (US)
(72) Inventor: Kolhouse, J. Steven, Columbus, 47201 (US); Qiu, Lu, Columbus, 47201 (US); Moe, Justin J., Forest Lake, 55025 (US); Richards, Kieran J., Daventry, NN11 8NU (GB); Landes, Brian K., Seymour, 47274 (US); Gong, Fei, Redmond, 98053 (US); Walseth, Andrew C., Mounds View, 55112 (US)
(74) Representative: Cleveland Scott York

(57) **Abstract**

An engine control system for an industrial vehicle includes an engine comprising a plurality of cylinders. The engine control system includes a controller. The controller is configured to receive vehicle data regarding the industrial vehicle. The controller is configured to receive environment data regarding an environment that the vehicle traverses. The controller is configured to determine that a deactivation condition is satisfied based on the vehicle data and the environment data. The controller is configured to deactivate at least one cylinder of the plurality of cylinders responsive to the cylinder deactivation condition being satisfied.

## Description

### CROSS-REFERENCE TO RELATED APPLICATION

This U.S. Patent Application claims the benefit of and priority to U.S. Provisional Application No. 63/755,764, filed February 7, 2025, and US Application No. 19/458,472, filed January 23, 2026 the entire disclosures of which is hereby incorporated by reference herein.

### TECHNICAL FIELD

The present invention relates to systems and methods for deactivating cylinders of an engine of a vehicle based on various data inputs.

### BACKGROUND

In a vehicle, an engine can include any number of cylinders. The number of cylinders is traditionally selected based on the anticipated maximum load for the vehicle. As such, when the vehicle is not operating at maximum load, the cylinders may operate at partial capacity.

### SUMMARY

The invention is set out in the appended set of claims.

An embodiment relates to an engine control system for an industrial vehicle. The engine control system includes an engine comprising a plurality of cylinders. The engine control system includes a controller. The controller is configured to receive vehicle data regarding the industrial vehicle. The controller is configured to receive environment data regarding an environment that the industrial vehicle traverses. The controller is configured to determine that a deactivation condition is satisfied based on the vehicle data and the environment data. The controller is configured to deactivate at least one cylinder of the plurality of cylinders responsive to the cylinder deactivation condition being satisfied.

An embodiment relates to an engine control system that includes a sensor communicably coupled with the controller. The sensor is configured to detect a vehicle weight of the industrial vehicle. The controller is further configured to receive a signal from the sensor, the signal indicating the vehicle weight, wherein the vehicle data comprises the vehicle weight. The controller is further configured to determine that the deactivation condition is satisfied based at least on the vehicle weight being less than a predetermined weight threshold.

An embodiment relates to an engine control system that includes a sensor communicably coupled with the controller. The sensor is configured to detect a tire pressure of a tire of the industrial vehicle. The controller is further configured to receive a signal from the sensor, the signal indicating the tire pressure, wherein the vehicle data comprises the tire pressure. The controller is further configured to determine that the deactivation condition is satisfied based at least on the tire pressure being less than a predetermined pressure threshold.

An embodiment relates to an engine control system, wherein the controller is further configured to receive the environment data from at least one of a sensor, a site system, or another vehicle in the environment, wherein the environment data includes at least one of road/route/surface grade, vehicle proximity relative to the industrial vehicle, or a traffic pattern.

An embodiment relates to an engine control system wherein the vehicle data includes a fault signal indicative of a fault that corresponds to the at least one cylinder of the plurality of cylinders. The controller is further configured to determine that a magnitude of the fault is greater than a threshold magnitude. The controller is further configured to identify the at least one cylinder as corresponding to the fault. The controller is further configured to deactivate the at least one cylinder based on the magnitude of the fault being greater than the threshold magnitude.

An embodiment relates to an engine control system, wherein the controller is further configured to determine that the industrial vehicle receives electrical energy from an external electrical system based on at least one of the vehicle data or the environment data; and determine that the deactivation condition is satisfied based on determining that the industrial vehicle receives electrical energy from the external electrical system.

An embodiment relates to an engine control system, wherein the controller is further configured to select a cylinder deactivation (CDA) mode from a plurality of CDA modes based on the vehicle data and the environment data, each CDA mode of the plurality of CDA modes corresponding to a subset of cylinders of the plurality of cylinders to deactivate; and select the at least one cylinder for deactivation based on the selected CDA mode.

An embodiment relates to an engine control system wherein the controller is further configured to cause deactivation of a predetermined number of pairs of cylinders of the plurality of cylinders responsive to determining that the deactivation condition is satisfied.

An embodiment relates to an engine control system wherein the controller is further configured to: determine a grade of the environment from the environment data; determine a vehicle weight of the industrial vehicle from the vehicle data; determine the vehicle weight is below a weight threshold, the weight threshold based at least partially on the grade of the environment; and select a mode of performing the deactivation of the at least one cylinder from a plurality of modes of deactivating An or more cylinders of the plurality of cylinders, based on the grade of the environment and the vehicle weight being below the weight threshold.

An embodiment relates to an engine control system for an industrial vehicle. The engine control system includes a plurality of cylinders and a controller. The controller is configured to determine, based on at least one of vehicle data regarding the industrial vehicle or terrain data regarding a terrain that the industrial vehicle is traversing, that a deactivation condition is satisfied. The controller is configured to deactivate at least one cylinder of the plurality of cylinders responsive to the cylinder deactivation condition being satisfied.

An embodiment relates to an engine control system comprising a sensor communicably coupled with the controller, wherein the controller is configured to receive a signal from the sensor. The signal indicates the vehicle data, wherein the vehicle data comprises at least one of a tire pressure, a state of charge of a battery of the industrial vehicle, a power demand of the industrial vehicle, a connection between the industrial vehicle and an external power source, or a fault detected that corresponds to a component of the industrial vehicle. The controller is configured to determine the deactivation condition is satisfied based on the vehicle data.

An embodiment relates to an engine control system comprising a sensor communicably coupled with the controller, wherein the controller is configured to receive a signal from the sensor. The signal indicates the terrain data, wherein the terrain data comprises at least one of a surface grade of the terrain, a presence of an obstacle relative to the industrial vehicle, a traffic pattern, or an amount or type of precipitation. The controller is configured to determine the deactivation condition is satisfied based on the terrain data.

An embodiment relates to an engine control system wherein the controller is configured to receive the terrain data from at least one of a sensor, a site system, or another vehicle located proximate to the industrial vehicle.

An embodiment relates to an engine control system wherein the vehicle data includes a fault signal indicative of a fault that corresponds to the at least one cylinder of the plurality of cylinders. The controller is configured to determine a magnitude of the fault, determine the magnitude of the fault is greater than a threshold magnitude, and deactivate the at least one cylinder based on the magnitude of the fault being greater than the threshold magnitude.

An embodiment relates to an engine control system wherein the controller is configured to select a cylinder deactivation (CDA) mode from a plurality of CDA modes that corresponds to the satisfied deactivation condition. The CDA mode corresponds to a subset of cylinders of the plurality of cylinders. The controller is configured to activate the CDA mode by deactivating the subset of cylinders.

An embodiment relates to an engine control system including a sensor communicably coupled with the controller. The controller is configured to receive a signal from the sensor indicating a connection between the industrial vehicle and an external electrical system, determine the industrial vehicle receives electrical energy from the external electrical system, and determine the deactivation condition is satisfied based on the industrial vehicle receiving the electrical energy from the external electrical system.

An embodiment relates to an engine control system for an industrial vehicle. The engine control system includes a plurality of cylinders and a controller. The controller is configured to detect a connection between the industrial vehicle and an external electrical system by which the industrial vehicle receives electrical power. The controller is configured to select, based on the connection, a cylinder deactivation (CDA) mode for one or more cylinders of the plurality of cylinders. The controller is configured to deactivate the one or more cylinders according to the CDA mode.

An embodiment relates to an engine control system wherein the controller is configured to determine an amount of electrical power the industrial vehicle receives from the external electrical system, determine the amount of electrical power is greater than an electrical power threshold, and deactivate the one or more cylinders based on the amount of the electrical power being greater than the electrical power threshold.

An embodiment relates to an engine control system wherein the controller is configured to receive a signal from a sensor, a site system, or another vehicle, the signal indicative of environment data, and select the CDA mode based on the connection and the environment data.

An embodiment relates to an engine control system wherein the controller is configured to receive a first signal indicative of vehicle data, receive a second signal indicative of environment data, and select the CDA mode based on the connection, the environment data, and the vehicle data.

Numerous specific details are provided to impart a thorough understanding of embodiments of the subject matter of the present disclosure. The described features of the subject matter of the present disclosure may be combined in any suitable manner in one or more embodiments and/or implementations. In this regard, one or more features of an aspect of the invention may be combined with one or more features of a different aspect of the invention. Moreover, additional features may be recognized in certain embodiments and/or implementations that may not be present in all embodiments or implementations.

### BRIEF DESCRIPTION OF THE FIGURES

FIG. 1 is a schematic diagram of an engine control system, according to an example embodiment.
FIG. 2 is a schematic diagram of a controller of the engine control system of FIG. 1, according to an example embodiment.
FIG. 3 is a flow diagram of a method of deactivating a cylinder of the engine control system of FIG. 1, according to an example embodiment.
FIG. 4 is a flow diagram of a method of deactivating a cylinder of the engine control system of FIG. 1, according to an example embodiment.

### DETAILED DESCRIPTION

Referring to the Figures generally, various embodiments disclosed herein relate to systems and methods of deactivating cylinders of an engine of a vehicle. For example, the system can receive various information associated with the vehicle or the environment the vehicle is traversing and selectively deactivate a subset of the cylinders of the engine based on the information. The system can analyze the information, determine the information satisfies a deactivation condition and select a cylinder deactivation (CDA) mode that corresponds with the deactivation condition. In some embodiments, the information received can be at least one of vehicle information (e.g., gross vehicle weight, tire pressure) or environmental information (e.g., surface grade, vehicle proximity, traffic pattern). Based on the information, the system can select a CDA mode and deactivate any number of cylinders. The system can continuously receive updated information and change the CDA mode accordingly as the vehicle data and environment data changes. This can allow for the system to operate selected cylinders at greater capacity and/or utilization, which can increase the efficiency of the engine and/or the efficacy of a corresponding aftertreatment system designed to treat the exhaust of the vehicle.

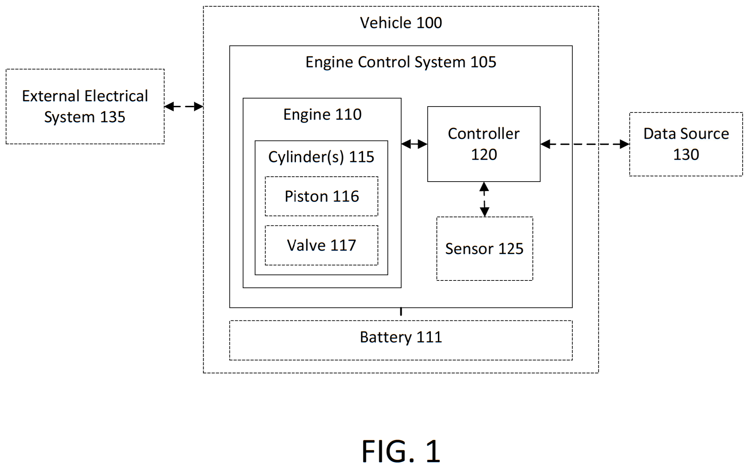

Referring now to FIG. 1, a schematic diagram of a vehicle 100 having an engine control system 105 is shown, according to an example embodiment. The vehicle 100 can be any type of vehicle. For example, in some embodiments, the vehicle 100 can be a mining vehicle. In some embodiments, the vehicle 100 may be an industrial vehicle (e.g., a machine with high power demands, etc.). For example, the vehicle 100 may be or include any one or more of a locomotive, a ship, a mining vehicle, or any other industrial vehicle which demands large amounts of power during operation. In some embodiments, the vehicle 100 can be a hybrid vehicle. The engine control system 105 can control operation of the vehicle 100 or components or systems thereof. For example, the engine control system 105 includes at least one power source, shown as engine 110. The engine 110 can provide power to the vehicle 100 to drive or power the vehicle 100, or the various components or systems thereof. In some embodiments, the vehicle 100 can be a hybrid vehicle and include an energy storage device 111. For example, the energy storage device 111 can be a battery, a capacitor, or a kinetic energy storage system ("KESS") (e.g., a flywheel), among others. The energy storage device 111 can provide power to the vehicle 100 to drive or power the vehicle 100, or the various components or systems thereof. The engine control system 105 can include or be coupled with (e.g., communicably, electrically, or operably coupled) the energy storage device 111.

The engine 110 includes a plurality cylinders 115. The engine 110 can include any number of cylinders 115. For example, the engine 110 can include 2, 3, 4, 5, 6, 7, 8, 9, 10, 11, 12, 13, 14, 15, or 16 cylinders, among others. The cylinders 115 can be a chamber of the engine 110 where fuel and air mix. The cylinder 115 can include at least one piston 116. The piston 116 can move in a first direction to draw in a mixture of fuel and air. The piston 116 can move in a second direction to compress the air-fuel mixture to increase the temperature and pressure of the mixture to make it more combustible. The cylinder 115 can include at least one valve 117. The valve 117 can regulate the flow of air and fuel into the cylinder 115 or the exhaust gases out of it. For example, the valve 117 can be an intake valve configured to open when the piston moves in the first direction to allow the air-fuel mixture to enter the cylinder 115 and close when the piston moves in the second direction to seal the cylinder 115 to compress the mixture. The valve 117 can be an exhaust valve configured to open to let out spent gases after combustion and close when the piston 116 move to draw in the next air-fuel mixture.

The engine control system 105 includes at least one controller 120. The controller 120 can be coupled with the engine 110. For example, the controller 120 can be communicably, physically, or electrically coupled with the engine 110. The controller 120 can be configured to control the engine 110 or systems or components thereof. For example, the controller 120 can be configured to control operation of the cylinders 115. In some embodiments, the controller 120 can selectively activate and deactivate one or more cylinders 115 (e.g., a subset of the cylinders 115). In some embodiments, the controller 120 can activate or deactivate individual cylinders. In some embodiments, the controller 120 can activate or deactivate pairs or groups of cylinders 115. Pairs or groups of cylinders 115 can be based on how the cylinders 115 relate to each other. For example, a pair of cylinders 115 in an engine can be paired or related based on their position on a crankshaft and/or their firing order. In some embodiments, paired cylinders may move together or be timed so that one fires while the other is in a different stroke, helping to balance the engine and reduce vibration. The controller 120 can detect or identify different pairs or groups of cylinders 115 based on their positioning or working relationships. Deactivating identified pairs of cylinders can reduce engine stress and maintain a balanced engine.

The controller 120 can deactivate one or more cylinders 115 in various ways. For example, in some embodiments, the controller 120 can deactivate a cylinder 115 by closing at least one valve 117 to prevent the cylinder 115 from participating in combustion. In some embodiments, the controller 120 can deactivate a cylinder 115 by stopping fuel injection to the cylinder 115.

In some embodiments, the controller 120 can receive data from various sources and use the data to determine which cylinders 115 to deactivate. For example, in some embodiments, the engine control system 105 can include at least one sensor 125. The sensor 125 can be coupled (e.g., communicably coupled) with the controller 120. The controller 120 can be configured to receive data (e.g., vehicle data or environment data) from the sensor 125. The sensor 125 can be any type of sensor capable of sensing or detecting data. For example, the sensor 125 can be a LIDAR sensor (e.g., to detect vehicles or obstacles in front of or behind the vehicle 100 or to determine a grade of the terrain), a scale (e.g., to detect a weight of the vehicle 100), or a pressure sensor (e.g., to detect tire pressure of a tire of the vehicle 100), among others. The sensor 125 can be configured to detect a vehicle weight of the vehicle 100. The sensor 125 can be configured to detect a tire pressure of a tire of the vehicle 100.

In some embodiments, the engine control system 105 can receive data from an external data source 130. For example, the data source 130 can be another vehicle that can communicate with the vehicle 100. In some embodiments the data source 130 can be a site system configured to communicate with the vehicle 100. For example, the site system can be a central hub or other communication system configured to broadcast or transmit data to vehicles 100 at a site. The data source 130 can be remote from the engine control system 105 and remote from the vehicle 100.

In some embodiments, the vehicle 100 can be connected to an external electrical system 135. The vehicle 100 can be configured to receive electrical energy from the external electrical system 135, such as by way of a mechanical and/or wired connection engaging the vehicle 100 with the external electrical system 135. The vehicle 100 can be configured to provide electrical energy to the external electrical system 135. The external electrical system 135 can be, for example, a trolley system, a dynamic charging system, or a pantograph, among others. In some embodiments, the electrical energy from the external electrical system 135 can replace energy provided by the cylinders 115 of the engine 110 such that some of the cylinders 115 can be deactivated. For example, some cylinders can remain active to provide power for inner components of the vehicle 100 (e.g., lights) while the energy from the external electrical system 135 can provide the power to move the vehicle 100.

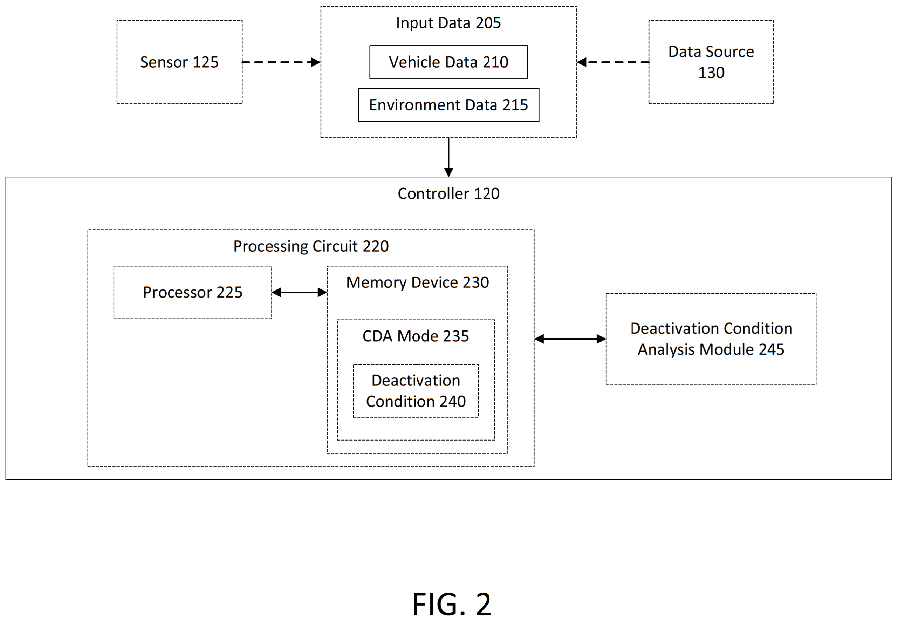

Referring now to FIG. 2, a schematic diagram of a controller 120 is shown, according to an example embodiment. The controller 120 can be structured to receive various data from various sources and activate or deactivate cylinders 115 of the engine 110 based on the data. For example, the controller 120 can receive input data 205. In some embodiments, the input data 205 can come from an external data source 130 or from a sensor 125 of the vehicle 100 or the engine control system 105. The input data 205 can include at least one of vehicle data 210 or environment data 215.

The controller 120 is configured to receive vehicle data 210 regarding the vehicle 100. For example, vehicle data 210 can include at least one of a vehicle weight (e.g., gross vehicle weight), a tire pressure, a state of charge (e.g., of an energy storage device 111 of the vehicle 100), a speed, a brake engagement (e.g., whether the brakes are engaged), or a power demand (e.g., throttle position), among others. The controller 120 can be configured to receive a signal from a sensor 125. In some embodiments, the signal can indicate the vehicle weight. In some embodiments, the signal can indicate the tire pressure. In some embodiments, the signal can indicate the state of charge. In some embodiments, the signal can indicate the speed. In some embodiments, the signal can indicate the brake engagement. In some embodiments, the signal can indicate the power demand.

In some embodiments, the vehicle data 210 can include a fault signal. The fault signal can indicate a fault that corresponds to at least one cylinder 115 of the plurality of cylinders 115 of the engine 110. For example, the fault signal can indicate a fault associated with the cylinder 115. The fault can indicate, for example, a leak, that the cylinder 115 is not working properly, or complete failure, among others. The faults can have different magnitudes, both qualitative and quantitative. For example, some faults may be more severe or emergent than others.

The controller 120 is configured to receive environment data 215, also referred to as terrain data, regarding an environment that the vehicle 100 traverses (e.g., travels and/or moves over; is on a route to travel over; is within a proximity of the vehicle 100 such that the vehicle 100 may be expected to move over the environment; etc.). The environment data 215 can relate to characteristics of the ground, route, or road (e.g., physical terrain or area characteristics of or surrounding the vehicle) that the vehicle 100 traverses. For example, environment data 215 can include at least one of surface grade (e.g., road grade), a proximity of other vehicles relative to the vehicle 100, route, or a traffic pattern, among others. Vehicle proximity can refer to a distance between the vehicle 100 and another vehicle or a general relative positioning between the vehicle 100 and another vehicle. For example, another vehicle can be proximate to (e.g., close to) the vehicle 100 if the other vehicle is in the same environment (e.g., construction site) as the vehicle 100, is traversing the same, parallel, or intersecting road or path, or is able to communicate with the vehicle 100 (e.g., the controller 120 can receive signals from or transmit signals to a controller of another vehicle). The controller 120 can be configured to receive the environment data 215 from at least one of a sensor 125 or another data source 130. For example, the controller 120 can be configured to receive the environment data 215 from at least one of a sensor 125, a site system, or another vehicle in the environment.

As shown in FIG. 2, the controller 120 can include at least one processing circuit 220. The at least one processing circuit 220 is structured or configured to execute or implement the instructions, commands, and/or control processes described herein. The at least one processing circuit 220 can be embodied as one or more hardware units, such as one or more electronic control units. As such, the at least one processing circuit 220 can be embodied as a one or more circuitry components including, but not limited to, processing circuitry, network interfaces, peripheral devices, input devices, output devices, sensors, etc. In some embodiments, the at least one processing circuit 220 can take the form of one or more analog circuits, electronic circuits (e.g., integrated circuits (IC), discrete circuits, system on a chip (SOCs) circuits, microcontrollers, etc.), telecommunication circuits, hybrid circuits, and any other type of "circuit." In this regard, the at least one processing circuit 220 can include any type of components for accomplishing or facilitating achievement of the operations described herein. For example, a circuit as described herein may include one or more transistors, logic gates (e.g., NAND, AND, NOR, OR, XOR, NOT, XNOR, etc.), resistors, multiplexers, registers, capacitors, inductors, diodes, wiring, and so on). The at least one processing circuit 220 can also include or be programmable hardware devices such as field programmable gate arrays, programmable array logic, programmable logic devices or the like. In some hardware unit configurations, the at least one processing circuit 220 can be geographically dispersed throughout separate locations in the vehicle 100. Alternatively, the at least one processing circuit 220 can be embodied in or within a single unit/housing.

The at least one processing circuit 220 can include one or more processors 225 and one or more memory devices 230. The one or more processors 225 can be implemented as one or more single- or multi-chip processors, digital signal processors (DSPs), application specific integrated circuits (ASICs), field programmable gate arrays (FPGAs), and/or suitable processors (e.g., other programmable logic devices, discrete hardware components, etc. to perform the functions described herein). The one or more processors 225 can be a microprocessor, a group of processors, etc. The one or more processors 225 also can be implemented as a combination of computing devices, such as a combination of a DSP and a microprocessor, a plurality of microprocessors, one or more microprocessors in conjunction with a DSP core, or any other such configuration. In some embodiments, the one or more processors 225 can be shared by multiple circuits. Alternatively or additionally, the one or more processors 225 can be structured to perform or otherwise execute certain operations independent of other processors. In other embodiments, two or more processors can be coupled via a bus to enable independent, parallel, pipelined, or multi-threaded instruction execution. All such variations are intended to fall within the scope of the present disclosure.

The one or more memory devices 230 (e.g., memory, memory unit, storage device) can include one or more devices (e.g., RAM, ROM, Flash memory, hard disk storage) for storing data and/or computer code for completing or facilitating the various processes, layers and modules described in the present disclosure. For example, the one or more memory devices 230 can include dynamic random-access memory (DRAM). The one or more memory devices 230 can be communicably connected to the one or more processors 225 to provide computer code or instructions to the one or more processors 225 for executing at least some of the processes described herein. Moreover, the one or more memory devices 230 can be or include tangible, non-transient volatile memory or non-volatile memory. Accordingly, the one or more memory devices 230 can include database components, object code components, script components, or any other type of information structure for supporting the various activities and information structures described herein.

In some embodiments, the one or more memory devices 230 can store a plurality of cylinder deactivation ("CDA") modes 235. Each CDA mode 235 can cause a predetermined subset of the cylinders 115 or a predetermined number of the cylinders 115 to deactivate. For example, the CDA modes 235 can have corresponding deactivation conditions 240. The one or more memory devices 230 can store a plurality of deactivation conditions 240. The controller 120 can determine which deactivation condition 240 is satisfied based on at least one of the vehicle data 210 or the environment data 215 that the controller 120 receives. Responsive to a given deactivation condition 240 being satisfied, the corresponding CDA mode 235 can be activated such that a subset of cylinders 115 are deactivated. The one or more memory devices 230 can store any number of CDA modes 235 and corresponding deactivation conditions 240.

The controller 120 can include or be comprised of a system of one or more processing modules. The processing modules can be configured to implement the instructions and/or commands described herein with respect to the processing engines. The processing modules can be or include any device(s), component(s), circuit(s), or other combination of hardware components designed or implemented to receive inputs for and/or automatically generate outputs. As shown in FIG. 2, in some embodiments, the controller 120 can include a deactivation condition analysis module 245. While this module 245 is shown in FIG. 2, it is noted that the controller 120 can include any number of processing engines, including additional modules which may be incorporated into, supplement, or replace the module shown in FIG. 2.

The controller 120 is configured to determine that a deactivation condition 240 is satisfied based on the vehicle data 210 and the environment data 215. For example, in some embodiments, the controller 120 can include at least one deactivation condition analysis module 245. The deactivation condition analysis module 245 can be configured to receive the vehicle data 210 and environment data 215 from various sources. The deactivation condition analysis module 245 can be configured to analyze the vehicle data 210 and the environment data 215 to determine whether a deactivation condition 240 is satisfied. In some embodiments, the controller 120 is configured to determine that the deactivation condition 240 is satisfied based on the environment data and/or based on determining a prediction of a future state of the environment based on the environment data.

In some embodiments, the controller 120 is configured to determine a deactivation condition 240 is satisfied based on the vehicle data 210. For example, the controller 120 can determine that the deactivation condition 240 is satisfied based at least on a vehicle weight being less than a predetermined weight threshold. In some embodiments, the controller 120 can determine that the deactivation condition 240 is satisfied based at least on a tire pressure being less than a predetermined pressure threshold.

In some embodiments, the controller 120 can be configured to determine a deactivation condition 240 is satisfied based on the environment data 215. For example, the controller 120 can determine that the deactivation condition 240 is satisfied based at least on a route grade being less than a predetermine grade threshold. In some embodiments, the controller 120 can determine the deactivation condition 240 is satisfied based at least on a distance between the vehicle 100 and another vehicle being greater than a predetermined distance threshold. In some embodiments, the controller 120 can determine the deactivation condition 240 is satisfied based at least on an estimated completion (e.g., arrival) time being greater than a predetermined completion time threshold (e.g., environment data includes traffic patterns).

In some embodiments, the controller 120 can be configured to determine that the vehicle 100 receives electrical energy from an external electrical system 135 based on at least one of the vehicle data 210 or the environment data 215, such as to detect a connection between the vehicle 100 and the external electrical system 135. In some embodiments, the controller 120 can determine that a deactivation condition 240 is satisfied based on determining that the vehicle 100 receives electrical energy from the external electrical system 135. In some embodiments, the controller 120 can be configured to determine how much electrical power the vehicle 100 receives from the external electrical system 135 and determine that a deactivation condition 240 is satisfied based on the amount of electrical power is greater than a predetermined electrical power threshold.

The controller 120 is configured to deactivate at least one cylinder 115 of the plurality of cylinders 115 responsive to a deactivation condition 240 being satisfied. For example, a deactivation condition 240 can correspond to a CDA mode 235. The CDA mode 235 can indicate a subset of cylinders 115 to be deactivated. Responsive to determining the deactivation condition 240 is satisfied, the controller 120 can deactivate the subset of cylinders 115 according to the CDA mode 235. In some embodiments, the controller 120 can be configured to cause deactivation of a predetermined number of pairs of cylinders 115 of the plurality of cylinders 115 responsive to determining that the deactivation condition 240 is satisfied.

In some embodiments, the controller 120 can be configured to select a CDA mode 235 from a plurality of CDA modes 235 based on the vehicle data 210 and the environment data 215. For example, the plurality of CDA modes 235 can include a first CDA mode 235 and a second CDA mode 235. Each CDA mode 235 of the plurality of CDA modes 235 can correspond to a subset of cylinders 115 of the plurality of cylinders 115 to deactivate. For example, the first CDA mode 235 can correspond to a first deactivation condition 240. The first CDA mode 235 can indicate a first subset of cylinders 115 to be deactivated. The second CDA mode 235 can correspond to a second deactivation condition 240. The second CDA mode 235 can indicate a second subset of cylinders 115 to be deactivated. The controller 120 can select at least one cylinder 115 for deactivation based on the selected CDA mode 235.

In some embodiments, the controller 120 can deactivate at least one cylinder 115 based on a magnitude of a fault being greater than a threshold magnitude. For example, the controller 120 can receive vehicle data 210 that includes a fault signal indicative of a fault that corresponds to at least one cylinder 115 of the plurality of cylinders 115. The controller 120 can be configured to determine that a magnitude (e.g., quantitative or qualitative) of the fault is greater than a threshold magnitude. The controller 120 can be configured to identify at least one cylinder 115 as corresponding to the fault. For example, a deactivation condition 240 can be satisfied based at least on the fault magnitude being less than the threshold magnitude. The deactivation condition 240 can correspond to a CDA mode that corresponds to the at least one cylinder 115. The controller 120 can be configured to deactivate the at least one cylinder 115 based on the magnitude of the fault being greater than the threshold magnitude. For example, the controller 120 can be configured to deactivate the at least one cylinder 115 based on the CDA mode corresponding to the satisfied deactivation condition 240. That is, the controller can determine whether to deactivate one or more cylinders of the plurality of cylinders 115 based on, at least in part, a fault or number of faults detected by one or more cylinders of the plurality of cylinders 115.

In some embodiments, the controller 120 can deactivate at least one cylinder 115 based on vehicle data 210 regarding the cylinders 115. For example, the controller 120 can receive vehicle data 210 that includes performance data regarding the engine 110 and each cylinder 115 of the plurality of cylinders 115 (e.g., engine and/or cylinder performance data). For example, the controller 120 can receive the performance data regarding the engine 110 and the cylinders 115, and compare the performance data to one or more corresponding deactivation conditions. The performance data may be or include one or more of a total run time of a cylinder 115, a number of times activated regarding one or more cylinders 115 or the engine 110, a number of cylinder faults detected regarding one or more of the cylinders 115, or the like. The controller 120 may determine whether the performance data satisfies one or more deactivation conditions 240. For example, the controller 120 may compare the performance data to one or more corresponding thresholds of the deactivation conditions 240 to determine whether the performance data indicates that one or more cylinders 115 satisfy one or more deactivation conditions 240. Responsive to determining that one or more cylinders 115 satisfy one or more deactivation conditions 240, the controller 120 may deactivate the respective one or more cylinders 115.

In some embodiments, the controller 120 can be configured to deactivate at least one cylinder 115 based on both vehicle data 210 and environment data 215. For example, the controller 120 can be configured to determine a grade of an environment from the environment data 215. The controller 120 can be configured to determine a vehicle weight of the vehicle 100 from the vehicle data 210. The controller 120 can be configured to determine the vehicle weight is below a weight threshold. The weight threshold can be based at least partially on the grade of the environment. The controller 120 can be configured to select a mode of performing the deactivation (e.g., a CDA mode 235) of the at least one cylinder 115 from a plurality of modes of deactivating one or more cylinders 115 of the plurality of cylinders 115 (e.g., from a plurality of CDA modes) based on the grade of the environment and the vehicle weight being below the weight threshold.

The controller 120 can be configured to select the CDA mode (e.g., as a mode of deactivation of one or more cylinders 115) based on the connection between the vehicle 100 and the external electrical system 135. For example, responsive to detecting the connection, the controller 120 can select the CDA mode from the plurality of CDA modes. In some embodiments, the controller 120 can select the CDA mode based on an amount of electrical energy and/or power received from the external electrical system 135.

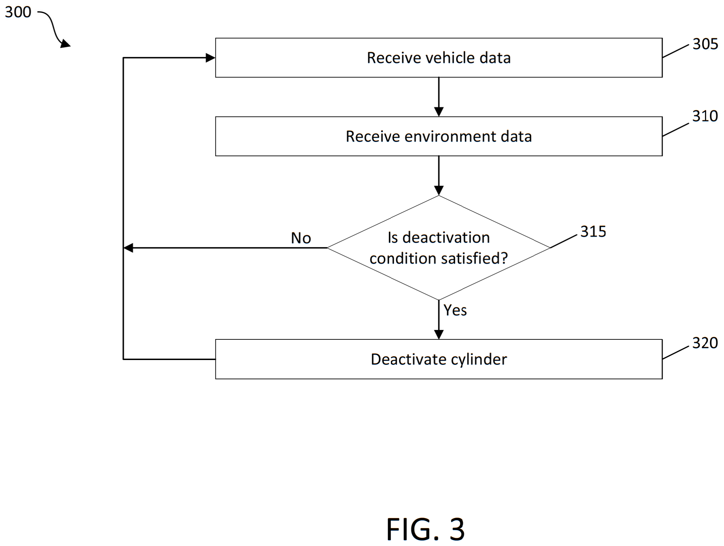

Referring to FIGS. 1-3, a method 300 of deactivating at least one cylinder 115 is shown, according to an example embodiment. Method 300 includes receiving vehicle data (step 305). For example, the controller 120 can receive vehicle data 210. The controller 120 can receive the vehicle data 210 from at least one of a sensor 125 or another data source 130. The vehicle data 210 can include, for example, vehicle weight, tire pressure, state of charge, or power demand, external power being received, faults detected, among others.

Method 300 includes receiving environment data (step 310). For example, the controller 120 can receive the environment data 215. The controller 120 can receive the environment data 215 from at least one of a sensor 125 or another data source 130. The environment data 215 can include, for example, surface grade, obstacle proximity relative to the vehicle 100, traffic patterns, temperature, or precipitation, among others.

Method 300 includes determining whether a deactivation condition is satisfied (step 315). For example, the controller 120 can determine whether a deactivation condition 240 is satisfied based on the vehicle data 210 and the environment data 215. Each deactivation condition 240 can have thresholds corresponding to the vehicle data 210 and the environment data 215. The controller 120 can compare the vehicle data 210 and the environment data 215 with the thresholds of the deactivation conditions 240 and identify a deactivation condition 240 that is satisfied by the received vehicle data 210 and environment data 215. For example, a first deactivation condition 240 can be satisfied if a vehicle weight is below a first weight threshold and a grade of a route is less than a first grade threshold.

Other deactivation conditions 240 can have different thresholds or different combination of variables to be considered. For example, a second deactivation condition 240 can be satisfied if a vehicle weight is below a second weight threshold and below a second grade threshold. A third deactivation condition 240 can be satisfied if a vehicle weight is below a third weight threshold, below a third grade threshold, above an external energy threshold, and below a fault threshold. Deactivation conditions 240 can have any combination of factors and any combination of thresholds.

If the controller 120 determines that a deactivation condition 240 is not satisfied, method 300 can return to steps 305 and 310 and receive updated vehicle data 210 and environment data 215. If the controller 120 determines that a deactivation condition 240 is satisfied, method 300 can proceed to step 320.

Method 300 includes deactivating a cylinder (step 320). For example, the controller 120 can deactivate at least one cylinder 115. Each deactivation condition 240 can correspond to a CDA mode 235. Each CDA mode 235 can indicate a predetermined number or a predetermined group of cylinders 115. For example, a first CDA mode 235 can indicate that a first number of cylinders 115 can be deactivated (e.g., number of individual cylinders, number of pairs of cylinders, number of groups of cylinders). In some embodiments, the controller 120 can select any of the plurality of cylinders 115, as long as the number matches the number indicated by the CDA mode. In some embodiments, the CDA mode identifies the specific cylinders 115 to deactivate. For example, a second CDA mode 235 can indicate that cylinders W, X, Y, and Z can be deactivated.

At step 320, the controller 120 can determine which CDA mode corresponds with the satisfied deactivation condition 240. The controller 120 can deactivate a number of cylinders based on the selected CDA mode 235.

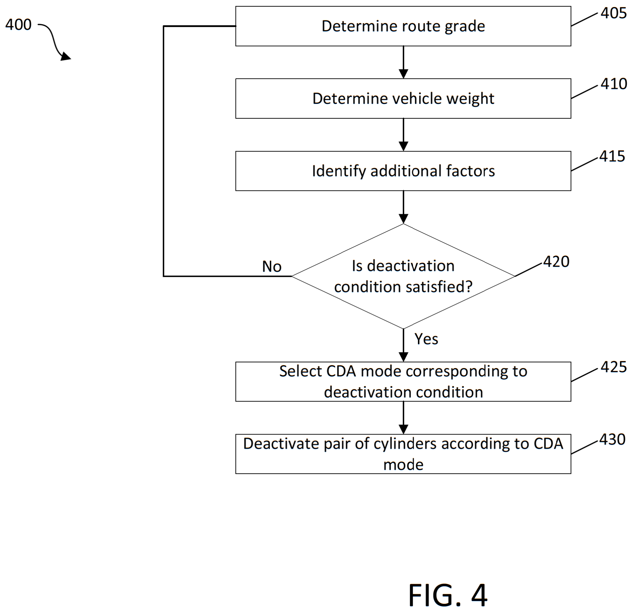

Referring to FIGS. 1, 2, and 4, a method 400 of deactivating at least one cylinder 115 is shown, according to an example embodiment. Method 400 includes determining a route grade (step 405). For example, the controller 120 can determine a route grade of a route that a vehicle 100 is or will traverse. The controller 120 can receive environment data 215. The environment data 215 can be from at least one of a sensor 125 or a data source 130. The environment data 215 can indicate the route grade, such as an uphill grade, downhill grade, or series of grade changes along the route.

Method 400 includes determining a vehicle weight (step 410). For example, the controller 120 can determine the vehicle weight of the vehicle 100. The controller 120 can receive vehicle data 210. The vehicle data 210 can be from at least one of a sensor 125 or a data source 130. The vehicle data 210 can indicate the vehicle weight.

Method 400 includes identifying any additional factors to consider to determine a cylinder deactivation opportunity (step 415). For example, the controller 120 can identify other factors to consider when determining whether there is an opportunity to deactivate cylinders 115. The additional factors can include, for example, other environment data 215 or vehicle data 210. For example, the environment data 215 can include at least one of obstacle proximity relative to the vehicle 100 (e.g., whether there is a structure or other vehicle close to the vehicle 100), traffic patterns (e.g., whether traffic is moving slow or there is a bottleneck somewhere), temperature, or precipitation (e.g., slippery conditions), among others. The vehicle data 210 can include at least one of tire pressure, state of charge (e.g., state of charge of a battery or power source of the vehicle), power demand (e.g., how much power the vehicle 100 requires), external power being received (e.g., whether the vehicle 100 is connected to an external electrical system 135 and how much power is being received), or faults detected (e.g., faults associated with the engine 110, cylinders 115, or other components of the vehicle 100). At step 415, the controller 120 can determine whether there is additional information to analyze based on whether the controller 120 receives additional vehicle data 210 or environment data 215.

Method 400 includes determining whether a deactivation condition is satisfied (step 420). For example, the controller 120 can determine whether a deactivation condition 240 is satisfied based on the vehicle data 210 and the environment data 215. Each deactivation condition 240 can have thresholds corresponding to the vehicle data 210 and the environment data 215. The controller 120 can compare the vehicle data 210 and the environment data 215 with the thresholds of the deactivation conditions 240 and identify a deactivation condition 240 that is satisfied by the received vehicle data 210 and environment data 215.

The deactivation conditions 240 can each have different factors to consider and/or different thresholds to meet. For example, a first deactivation condition 240 can include a first route grade threshold and a first vehicle weight threshold. The first deactivation condition 240 can be satisfied if the route grade satisfies the route grade threshold and the vehicle weight satisfies the first vehicle weight threshold, and the controller 120 does not consider any additional factors. A second deactivation condition 240 can include a second route grade threshold, a second vehicle weight threshold, a fault magnitude threshold, and an external power supply threshold. The second deactivation condition 240 can be satisfied if the route grade satisfies the route grade threshold, the vehicle weight satisfies the second vehicle weight threshold, the fault magnitude satisfies the fault magnitude threshold, and the external power supply satisfies the external power supply threshold. The controller 120 can have any number of deactivation conditions 240 with various threshold combinations.

Method 400 includes selecting a CDA mode (step 425). For example, the controller 120 can select a CDA mode 235 that corresponds to the satisfied deactivation condition 240. Each deactivation condition 240 can correspond with a specific CDA mode 235. Responsive to identifying which deactivation condition 240 is satisfied by the received vehicle data 210 and environment data 215, the controller 120 can select the corresponding CDA mode 235.

Method 400 includes deactivating at least one pair of cylinders (step 430). For example, the controller 120 can deactivate at least one pair of cylinders 115 according to the selected CDA mode 235. Each CDA mode 235 can indicate specific cylinders 115 to deactivate or a specific number of cylinders 115 to deactivate. If the CDA mode 235 indicates the specific cylinders 115, the controller 120 can deactivate the specific cylinders 115. If the CDA mode 235 indicates a number of cylinders 115, the controller 120 can determine which cylinders 115 to deactivate.

Described herein are various examples of combinations of factors that can be evaluated by the controller 120 to select a CDA mode 235. Other combinations with fewer, more, or different factors are also possible. For example, the controller 120 can determine that the route grade is flat and that the vehicle weight is less than a threshold weight. Such factors can satisfy a first deactivation condition 240 such that the controller 120 can select the corresponding first CDA mode 235. The first CDA mode 235 can indicate how many and/or which cylinders 115 to deactivate.

In some embodiments, the controller 120 can determine that the route grade is less than a threshold (e.g., a downward sloped grade). Such a factor can satisfy a second deactivation condition 240 such that the controller 120 can select the corresponding second CDA mode 235 (e.g., vehicle weight is not considered when the vehicle 100 is on a decline). The second CDA mode 235 can indicate how many and/or which cylinders 115 to deactivate.

In some embodiments, the controller 120 can determine that the route grade is less than a threshold (e.g., a downward sloped grade), the vehicle weight is greater than a threshold (e.g., loaded), and the vehicle 100 is connected to an external electrical system 135. Such factors can satisfy a third deactivation condition 240 such that the controller 120 can select the corresponding third CDA mode 235. The third CDA mode 235 can indicate how many and/or which cylinders 115 to deactivate. The third CDA mode 235 can initiate dynamic charging between the external electrical system 135 and the vehicle 100.

In some embodiments, the controller 120 can determine that the route grade is less than a threshold (e.g., a downward sloped grade), the vehicle weight is less than a threshold (e.g., unloaded), and the vehicle 100 is connected to an external electrical system 135. Such factors can satisfy a fourth deactivation condition 240 such that the controller 120 can select the corresponding fourth CDA mode 235. The fourth CDA mode 235 can indicate how many and/or which cylinders 115 to deactivate. The fourth CDA mode 235 can initiate dynamic charging between the external electrical system 135 and the vehicle 100.

In some embodiments, the controller 120 can determine that the route grade is greater than a threshold (e.g., an upward sloped grade), the vehicle weight is less than a threshold (e.g., unloaded), and the vehicle 100 is connected to an external electrical system 135. Such factors can satisfy a fifth deactivation condition 240 such that the controller 120 can select the corresponding fifth CDA mode 235. The fifth CDA mode 235 can indicate how many and/or which cylinders 115 to deactivate. The fifth CDA mode 235 can indicate a power demand from the external electrical system 135 to compensate for the power lost from the deactivated cylinders 115.

In some embodiments, the controller 120 can determine that the route grade is greater than a threshold (e.g., an upward sloped grade), that the vehicle weight is greater than a threshold (e.g., loaded), and that the vehicle is not connected to an external electrical system 135. Such factors can satisfy a sixth deactivation condition 240 such that the controller 120 can select the corresponding sixth CDA mode 235. The sixth CDA mode 235 can indicate how many and/or which cylinders 115 to deactivate. For example, the sixth CDA mode 235 may include no deactivation such that all cylinders 115 remain active in order to get the loaded vehicle 100 up the upward sloped grade.

In some embodiments, the vehicle 100 can be a hybrid vehicle with an engine 110 and an energy storage device 111. The controller 120 can determine that the vehicle 100 is stopped. For example, the controller 120 can determine that the vehicle speed is zero or that the brake is engaged. Such factor can satisfy a seventh deactivation condition 240 such that the controller 120 can select the corresponding seventh CDA mode 235. The seventh CDA mode 235 can indicate how many and/or which cylinders 115 to deactivate. For example, the seventh CDA mode 235 may include no deactivation such that all cylinders 115 remain active in order to get the vehicle 100 moving from the stopped state.

In some embodiments, the vehicle 100 can be a hybrid vehicle with an engine 110 and an energy storage device 111. The controller 120 can determine that a state of charge of the energy storage device 111 is below a threshold. For example, the controller 120 can determine that the energy storage device 111 is not fully charged. Such factor can satisfy an eighth deactivation condition 240 such that the controller 120 can select the corresponding eighth CDA mode 235. The eighth CDA mode 235 can indicate how many and/or which cylinders 115 to deactivate. For example, the eighth CDA mode 235 may include no deactivation such that all cylinders 115 remain active in order to charge the energy storage device 111.

As an illustrative example, the vehicle 100 can be a hybrid vehicle with an engine 110 and an energy storage device 111. When the vehicle 100 is stopped, instead of deactivating cylinders 115 since the vehicle 100 does not need power to move, the cylinders 115, or a subset thereof, can remain active such that the active cylinders 115 can charge an energy storage device 111 that is not fully charged.

In some embodiments, the controller 120 can identify a fault associated with at least one cylinder 115. The controller 120 can determine a magnitude of the fault. For example, the fault can have a lower magnitude (e.g., less severe), for example with a small leak in cylinder 115, or the fault can have a greater magnitude (e.g., more severe), for example with a cylinder 115 that is not working properly. The fault magnitude can satisfy a fault magnitude threshold. Such a factor can satisfy a ninth deactivation condition 240 such that the controller 120 can select the corresponding seventh CDA mode 235. The ninth CDA mode 235 can indicate how many and which cylinders 115 to deactivate. A fault can be combined with any combination of other factors to establish a satisfied deactivation condition 240.

The above examples are illustrative of the variety of combinations of factors that can lead to different deactivation conditions 240. There can be any number of deactivation conditions 240 based on any factors, or combinations thereof, that correspond to any number of CDA modes 235.

As utilized herein, the terms "approximately," "about," "substantially", and similar terms are intended to have a broad meaning in harmony with the common and accepted usage by those of ordinary skill in the art to which the subject matter of this disclosure pertains. For example, "approximately equal to," "about equal to," and "substantially equal to" may have the meaning of being within a predefined amount or percentage value of the mentioned value. The predefined amount or the percentage value of the threshold may change based on various conditions, whereby the predefined amount or the percentage value of the threshold is set at a first value in a first set of operating conditions and a second value in a second set of operating conditions different from the first set of operating conditions. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using one or more separate intervening members, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic. For example, circuit A communicably "coupled" to circuit B may signify that the circuit A communicates directly with circuit B (i.e., no intermediary) or communicates indirectly with circuit B (e.g., through one or more intermediaries).

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

It should be understood that the controller 120 may include any number of circuits for completing the functions described herein. Additional circuits with additional functionality may also be included. Further, the controller 120 may further control other activity beyond the scope of the present disclosure. In one configuration, the "circuits" may be implemented in machine-readable medium for execution by various types of processors, such as the processor 225. Executable code may, for instance, comprise one or more physical or logical blocks of computer instructions, which may, for instance, be organized as an object, procedure, or function. Nevertheless, the executables need not be physically located together, but may comprise disparate instructions stored in different locations which, when joined logically together, comprise the circuit and achieve the stated purpose for the circuit. Indeed, a circuit of computer readable program code may be a single instruction, or many instructions, and may even be distributed over several different code segments, among different programs, and across several memory devices. Similarly, operational data may be identified and illustrated herein within circuits, and may be embodied in any suitable form and organized within any suitable type of data structure. The operational data may be collected as a single data set, or may be distributed over different locations including over different storage devices, and may exist, at least partially, merely as electronic signals on a system or network.

While the term "processor" is briefly defined above, the term "processor" and "processing circuit" are meant to be broadly interpreted. In this regard and as mentioned above, the "processor" may be implemented as one or more processors, application specific integrated circuits (ASICs), field programmable gate arrays (FPGAs), digital signal processors (DSPs), or other suitable electronic data processing components structured to execute instructions provided by memory. The one or more processors may take the form of a single core processor, multi-core processor (e.g., a dual core processor, triple core processor, quad core processor, etc.), microprocessor, etc. In some embodiments, the one or more processors may be external to the apparatus, for example the one or more processors may be a remote processor (e.g., a cloud-based processor). Alternatively or additionally, the one or more processors may be internal and/or local to the apparatus. In this regard, a given circuit or components thereof may be disposed locally (e.g., as part of a local computing system such as the controller, etc.) or remotely (e.g., as part of a remote server such as a cloud-based server). To that end, components may be distributed across one or more locations.

Embodiments within the scope of the present disclosure include program products comprising computer or machine-readable media for carrying or having computer or machine-executable instructions or data structures stored thereon. Such machine-readable media can be any available media that can be accessed by a computer. The computer readable medium may be a tangible computer readable storage medium storing the computer readable program code. The computer readable storage medium may be, for example, but not limited to, an electronic, magnetic, optical, electromagnetic, infrared, holographic, micromechanical, or semiconductor system, apparatus, or device, or any suitable combination of the foregoing. More specific examples of the computer readable medium may include but are not limited to a portable computer diskette, a hard disk, a random access memory (RAM), a read-only memory (ROM), an erasable programmable read-only memory (EPROM or Flash memory), a portable compact disc read-only memory (CD-ROM), a digital versatile disc (DVD), an optical storage device, a magnetic storage device, a holographic storage medium, a micromechanical storage device, or any suitable combination of the foregoing. In the context of this document, a computer readable storage medium may be any tangible medium that can contain, and/or store computer readable program code for use by and/or in connection with an instruction execution system, apparatus, or device. Machine-executable instructions include, for example, instructions and data which cause a computer or processing machine to perform a certain function or group of functions.

The computer readable medium may also be a computer readable signal medium. A computer readable signal medium may include a propagated data signal with computer readable program code embodied therein, for example, in baseband or as part of a carrier wave. Such a propagated signal may take any of a variety of forms, including, but not limited to, electrical, electro-magnetic, magnetic, optical, or any suitable combination thereof. A computer readable signal medium may be any computer readable medium that is not a computer readable storage medium and that can communicate, propagate, or transport computer readable program code for use by or in connection with an instruction execution system, apparatus, or device. Computer readable program code embodied on a computer readable signal medium may be transmitted using any appropriate medium, including but not limited to wireless, wireline, optical fiber cable, Radio Frequency (RF), or the like, or any suitable combination of the foregoing.

In one embodiment, the computer readable medium may comprise a combination of one or more computer readable storage mediums and one or more computer readable signal mediums. For example, computer readable program code may be both propagated as an electro-magnetic signal through a fiber optic cable for execution by a processor and stored on RAM storage device for execution by the processor.

Computer readable program code for carrying out operations for aspects of the present disclosure may be written in any combination of one or more other programming languages, including an object-oriented programming language such as Java, Smalltalk, C++ or the like and conventional procedural programming languages, such as the "C" programming language or similar programming languages. The computer readable program code may execute entirely on the user's computer, partly on the user's computer, as a stand-alone computer-readable package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The program code may also be stored in a computer readable medium that can direct a computer, other programmable data processing apparatus, or other devices to function in a particular manner, such that the instructions stored in the computer readable medium produce an article of manufacture including instructions which implement the function/act specified in the schematic flowchart diagrams and/or schematic block diagrams block or blocks.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the apparatus and system as shown in the various exemplary embodiments is illustrative only. Additionally, any element disclosed in one embodiment may be incorporated or utilized with any other embodiment disclosed herein.

## Claims

1. An engine control system for an industrial vehicle, the engine control system comprising:
an engine comprising a plurality of cylinders; and
a controller configured to:
determine, based on at least one of vehicle data regarding the industrial vehicle or terrain data regarding a terrain that the industrial vehicle is traversing, that a deactivation condition is satisfied; and
deactivate at least one cylinder of the plurality of cylinders responsive to the deactivation condition being satisfied.

2. The engine control system of claim 1, wherein the controller is configured to determine that the deactivation condition is satisfied based on both the vehicle data regarding the industrial vehicle and terrain data regarding a terrain that the industrial vehicle is traversing.

3. The engine control system of claim 1 or claim 2, further comprising:
a sensor communicably coupled with the controller;
wherein the controller is further configured to:
receive a signal from the sensor, the signal indicating the vehicle data.

4. The engine control system of claim 3, wherein the vehicle data comprises at least one of a vehicle weight, a tire pressure, a state of charge of a battery of the industrial vehicle, a power demand of the industrial vehicle, a connection between the industrial vehicle and an external power source, or a fault detected that corresponds to a component of the industrial vehicle;
and wherein the controller is further configured to determine the deactivation condition is satisfied based on the vehicle data.

5. The engine control system of claim 4 wherein the vehicle data comprises the vehicle weight;
and wherein the controller is further configured to determine that the deactivation condition is satisfied based at least on the vehicle weight being less than a predetermined weight threshold.

6. The engine control system of claim 4 or claim 5 wherein the vehicle data comprises the tire pressure;
and wherein the controller is further configured to determine that the deactivation condition is satisfied based at least on the tire pressure being less than a predetermined pressure threshold.

7. The engine control system of claim 1 or claim 2, further comprising:
a sensor communicably coupled with the controller;
wherein the controller is further configured to:
receive a signal from the sensor, the signal indicating the terrain data.

8. The engine control system of claim 7, wherein the terrain data comprises at least one of a surface grade of the terrain, a presence of an obstacle relative to the industrial vehicle, a traffic pattern, or an amount or type of precipitation; and
wherein the controller is further configured to determine the deactivation condition is satisfied based on the terrain data.

9. The engine control system of claim 1 or claim 2, wherein the controller is further configured to:
receive the terrain data from at least one of a site system, or another vehicle located proximate to the industrial vehicle.

10. The engine control system of any one of the preceding claims, wherein:
the vehicle data includes a fault signal indicative of a fault that corresponds to the at least one cylinder of the plurality of cylinders; and
the controller is further configured to:
determine a magnitude of the fault;
determine the magnitude of the fault is greater than a threshold magnitude; and
deactivate the at least one cylinder based on the magnitude of the fault being greater than the threshold magnitude.

11. The engine control system of claim 1, wherein the controller is further configured to:
select a cylinder deactivation (CDA) mode from a plurality of CDA modes that corresponds to the satisfied deactivation condition, the CDA mode corresponding to a subset of cylinders of the plurality of cylinders; and
activate the CDA mode by deactivating the subset of cylinders.

12. The engine control system of any one of the preceding claims, further comprising:
a sensor communicably coupled with the controller;
wherein the controller is further configured to:
receive a signal from the sensor indicating a connection between the industrial vehicle and an external electrical system;
determine the industrial vehicle receives electrical energy from the external electrical system; and
determine the deactivation condition is satisfied based on the industrial vehicle receiving the electrical energy from the external electrical system.

13. The engine control system of any one of the preceding claims, wherein the controller is further configured to:
determine an amount of electrical power the industrial vehicle receives from the external electrical system;
determine the amount of electrical power is greater than an electrical power threshold; and
deactivate the one or more cylinders based on the amount of the electrical power being greater than the electrical power threshold.

14. The engine control system of claim 11, wherein the controller is further configured to:
detect a connection between the industrial vehicle and an external electrical system by which the industrial vehicle receives electrical power;
receive a signal from a sensor, a site system, or another vehicle, the signal indicative of environment data; and
select the CDA mode based on the connection and the environment data.

15. The engine control system of claim 11, wherein the controller is further configured to:
receive a first signal indicative of vehicle data;
receive a second signal indicative of environment data; and
select the CDA mode based on the connection, the environment data, and the vehicle data.
